# EUROPEAN PATENT SPECIFICATION

(11) **EP 4 371 751 B1**
(45) Date of publication and mention of the grant of the patent: **05.03.2025**
(21) Application number: 23195957.8
(22) Date of filing: 07.09.2023
(51) Int. Cl.: B29D 30/06

(54) **PRODUCTION METHOD OF A PNEUMATIC TIRE WITH A SEALANT LAYER**
HERSTELLUNGSVERFAHREN FÜR EINEN LUFTREIFEN MIT EINER DICHTUNGSMITTELSCHICHT
PROCÉDÉ DE PRODUCTION D'UN PNEUMATIQUE COMPRENANT UNE COUCHE D'ÉTANCHÉITÉ

(30) Priority: 15.11.2022 JP 2022182447
(43) Date of publication of application: 22.05.2024
(73) Proprietor: Toyo Tire Corporation, Itami-shi, Hyogo 664-0847 (JP)
(72) Inventor: TSUJII, Masanori, Hyogo, 664-0847 (JP)
(74) Representative: Müller-Boré & Partner Patentanwälte PartG mbB

(56) References cited:
- EP-A1- 2 927 027
- EP-A1- 3 199 384
- WO-A1-2022/124012
- JP-A- 2019 108 000
- US-A1- 2010 307 655

## Description

### Field of the Invention

The present invention relates to a production method of a pneumatic tire.

### Related Art

Conventionally, a pneumatic tire has been known which is equipped with a puncture prevention function whereby a hole in the tire formed during puncture is automatically plugged by a sealant layer provided to the tire inner surface. For example, Patent Document 1 discloses a pneumatic tire in which a sealant layer is formed by coating a sealant material of substantially cord-like shape in a spiral shape continuously along the tire inner surface.

Patent Document 1: Japanese Unexamined Patent Application, Publication No.2016-78817
Document JP 2019 108000 A describes an inflated tire having a sealed layer which is formed by winding a strip of a sealer in a spiral shape and which is formed on the inner circumference surface of a tread part. A width of the strip at an end of the sealed layer in the tire widthwise direction is smaller than the width of the strip at the center part of the sealed layer in the tire widthwise direction.

### SUMMARY OF THE INVENTION

In a tire having a sealant layer on the inner surface, there is an issue of the heat dissipation decreasing due to the sealant layer. In particular, when the radiation of heat generated by the portions on both sides in the tire-width direction of the steel belt embedded in the tread deforming is inhibited by the sealant layer, there is concern over leading to damage of the tire caused by physical property variation due to heat. For example, there is a possibility of separation occurring from the decline in adhesion between the steel belts and rubber. This point has not been mentioned in the above-mentioned patent documents, and there is room for improvement.

The present invention has an object of providing the production method of a pneumatic tire which can suppress the occurrence of heat damage, while maintaining the puncture prevention function by the sealant layer.

A production method of a tire according to the present invention is a production method of a tire including tread which includes a belt, in which a sealant layer is provided at least to an inner surface of the tread, the method including: measuring a contact width of the tire; when defining a tire-width direction length from a tire-width direction center until an end of the contact width as CW1, and defining a tire-width direction length from the tire-width direction center until another end of the contact width as CW2, comparing CW1 and CW2 and establishing a larger thereof as CW; establishing a length from the tire-width direction center until an end in the tire-width direction of the belt as BW, and prescribing a tire-width direction length SW of a sealant material coating area on one side in the tire-width direction from the tire-width direction center as CW<SW<BW; and arranging in parallel in the tire-width direction a plurality of annular circling parts of a sealant material extending in the tire-circumferential direction to provide the sealant layer, by establishing a tire-width direction length SW x 2 of the sealant material coating area on the inner surface of the tread as a coating area length in the tire-width direction of the sealant material, and coating a belt-like sealant material on the coating area in the tire-width direction of the sealant material, while circling along the tire-circumferential direction, and while transitioning a path of circling thereof to one direction side of the tire-width direction at least once every circling.

According to the present invention, it is possible to provide the production method of a pneumatic tire which can suppress the occurrence of heat damage, while maintaining the puncture prevention function by the sealant layer.

### BRIEF DESCRIPTION OF THE DRAWINGS

Fig. 1 is a side view of a tire produced by a production method according to an embodiment;
Fig. 2 is a cross-sectional view in a tire-width direction of the above tire;
Fig. 3 is a view showing the shape of a region in which a contact surface of the above tire which actually makes contact with the road surface;
Fig. 4 is a flowchart showing a production method according to the embodiment;
Fig. 5 is an expanded view showing an inner surface of a tire according to an embodiment, which schematically shows a sealant layer; and
Fig. 6 is a view schematically showing an example of a method of coating a sealant material onto a tire inner surface, upon producing the tire according to the embodiment.

### DETAILED DESCRIPTION OF THE INVENTION

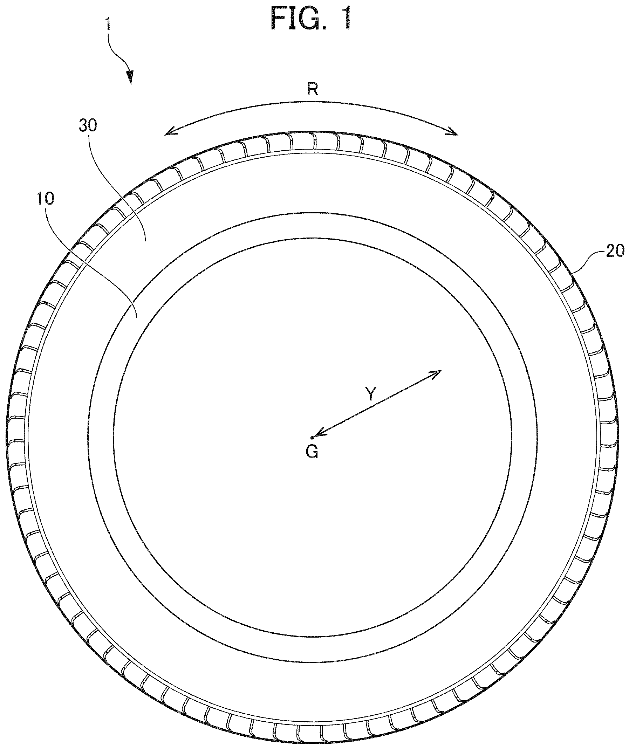

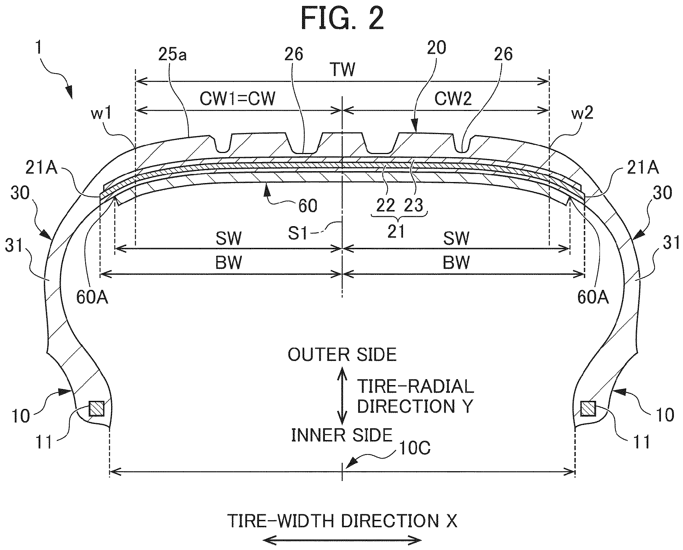

Hereinafter, an embodiment will be explained while referencing the drawings. Fig. 1 is a side view of a tire 1 produced by a production method according to the embodiment. G in Fig. 1 shows a rotational axis line, which is a center of rotation of the tire 1, extending in a paper plane front/back direction of Fig. 1. Fig. 1 shows a circumferential direction of the tire 1 by the arrow R. Fig. 2 is a view schematically showing a tire-width direction cross-sectional view of the tire 1. The tire 1 according to an example is a pneumatic tire mounted to a rim (not shown) in which the internal pressure is filled by air or the like at the inner cavity thereof. The tire 1 according to the embodiment is a tire for a passenger vehicle. It should be noted that the production method of the tire according to the embodiment is applicable to a production method of a tire for various vehicles such as light trucks, trucks and buses.

The internal structure of the tire 1 will be briefly explained by Fig. 2. Fig. 2 shows a cross section of the tire 1 having a left/right symmetrical structure in a direction extending in the rotation axis line G shown in Fig. 1. The cross-sectional view of Fig. 2 shows the state of the tire 1 in an unloaded state mounting the tire 1 to a standard rim (not shown), and filled with standard internal pressure.

In Fig. 2, the symbol S1 is the tire equatorial plane orthogonal to the rotation axis line G. Fig. 2 shows the tire-width direction and tire-radial direction as referenced in the present disclosure by arrows X and Y, respectively. Tire-width direction (arrow X direction) is a direction parallel to the rotation axis line G, and is the left/right direction in the paper plane of the cross-sectional view of Fig. 2. Tire-width direction inner side is a direction approaching the tire equatorial plane S1, and is the paper-plane central side in Fig. 2. Tire-width direction outer side is a direction distancing from the tire equatorial plane S1, and is the paper-plane left side and right side in Fig. 2. Tire-radial direction (arrow Y direction) is a direction perpendicular to the rotational axis line G, and is the paper-plane up/down direction in Fig. 2. Fig. 1 shows a tire-radial direction Y. Tire-radial direction outer side is a direction distancing from the rotation axis line G, and is the paper-plane upper side in Fig. 2. Tire-radial direction inner side is a direction approaching the rotation axis line G, and is the paper-plane lower side in Fig. 2.

The tire 1 includes a pair of beads 10 provided on both sides in the tire-width direction, tread 20 forming a contact surface with the road surface, and a pair of sidewalls 30 extending between the pair of beads 10 and the tread 20.

The pair of beads 10 constitute a tire-radial direction inside portion of the tire 1. In order to raise the rigidity of this portion, the bead 10 includes high modulus rubber. The bead 10 includes an annular bead core 11 made by covering a plurality of wound bead wires made of metal with rubber. The bead core 11 plays the role of fixing the tire 1 to the rim.

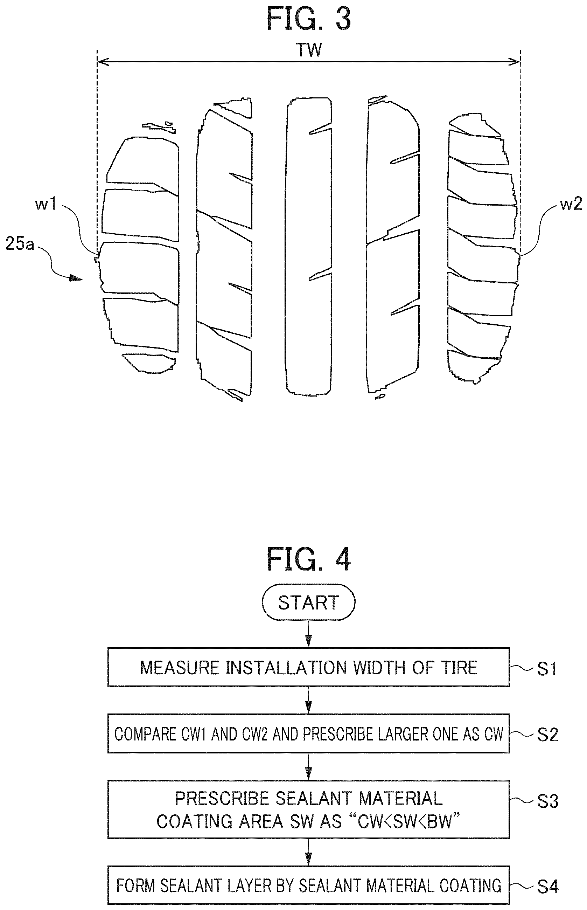

The tread 20 includes belts 21, and tread rubber 25 arranged at the outer side in the tire-radial direction of the belts 21. The tread rubber 25 has a contact surface 25a which makes contact with the road surface. A plurality of main grooves 26 extending in the circumferential direction are formed in the contact surface 25a. Fig. 3 shows a contact portion in a state of the contact surface 25a actually contacting the road surface. As shown in Fig. 3, the portion in which the contact surface 25a contacts the road surface makes a substantially elliptical shape. As shown in Fig. 2 and Fig. 3, in the tire 1, the tire-width direction length of the contact surface 25a is defined as a contact width TW of the tread 20.

The belt 21 is a member reinforcing the tread 20. The belt 21 of the embodiment is a two-layer structure including an inside belt 22, and outside belt 23 arranged on the outer side in the tire-radial direction of the inside belt 22. The inside belt 22 and outside belt 23 both have a structure in which belt cords such as a plurality of steel cords are covered with rubber. The inside belt 22 is larger in tire-width direction length than the outside belt 23. Therefore, each of the ends 21A on both sides in the tire-width direction of the belt 21 is configured by an end in the tire-width direction of the inside belt 22. It should be noted the outside belt 23 may be larger in tire-width direction length than the inside belt 22. Furthermore, the belt 21 may be a single layer structure, or may be a structure of three or more layers.

The sidewall 30 includes sidewall rubber 31 which constitutes a side wall surface on the outer side of the tire 1. The sidewall rubber 31 bends the most upon the tire 1 making a cushion action, and normally is configured by flexible rubber having fatigue resistance.

Although omitted from Fig. 2, a carcass ply constituting a ply serving as the backbone of the tire 1 is embedded inside of the tire 1. This carcass ply is embedded inside of the tire 1, in a mode passing between the pair of bead cores 11, the pair of sidewalls 30 and the tread 20. This carcass ply, for example, has a configuration in which the plurality of ply cords consisting of an insulative organic fiber cord such as polyester or polyamide, or the like are covered by rubber. The above-mentioned belt 21 is arranged on the outer side in the tire-radial direction of this carcass ply. In addition, although omitted from Fig. 2, the inner liner as the rubber layer constituting the inner wall surface of the tire 1 is provided spanning between the pair of beads, at the tire inner cavity side of the carcass ply. This inner liner is configured by air permeation resistant rubber, whereby the air inside the tire inner cavity is prevented from leaking to outside.

As shown in Fig. 2, the tire 1 according to the present embodiment further includes a sealant layer 60. The sealant layer 60 is arranged over the entire circumference in the tire-circumferential direction, in a region of the tire inner cavity surface configured by the inner liner corresponding at least to the tread 20. The sealant layer 60 is formed by a belt-like sealant material being wound along the tire-circumferential direction on the tire inner surface. As the sealant material, a material having stickiness is favorably used, and is pasted to the tire inner cavity surface by the stickiness thereof. The thickness of the sealant layer 60 of at least 2 mm is said to be favorable.

A production method of a tire according to an embodiment for producing the tire 1 equipped with the above configuration will be explained below. The production method of a tire according to the embodiment relates to a method of forming the above-mentioned sealant layer 60 on the tire 1 obtained by vulcanizing a green tire, which is the source article of the tire 1 molded so as to be the above-mentioned configuration.

Fig. 4 is a flowchart showing a production method according to the embodiment in process order. As shown in Fig. 4, as a production method of the tire of the embodiment, first, a contact width of the tire 1 is measured (Step S1). The contact width of the tire 1 is a contact width TW of the tread 20, as shown in Fig. 2 and Fig. 3. It should be noted that measurement of this contact width TW measures at conditions based on standard internal pressure and maximum load capability of a tire standard such as JATMA, ETRTO and TRA in accordance with the size of the tire 1. By measuring the condition at which the load is the maximum in this way, the contact width TW reaches the maximum contact width of the tire 1.

It should be noted that the contact width TW can be determined by a database associating the contact shape and structural information (experimental prediction model), or determined by contact analysis such as FEM, in addition to directly measuring, for example.

Next, as shown in Fig. 2, the center 10C between ends on the inner side in the tire-radial direction of the pair of beads 10 is set at the tire-width direction center, the tire-width direction length from this tire-width direction center until one end w1 of the contact width TW is defined as CW1, and the tire-width direction length from the tire-width direction center until the other end w2 of the contact width TW is defined as CW2. It should be noted that, in the embodiment, since the structure of the tire 1 is left/right symmetrical, the center 10C between the pair of beads 10 established as the tire-width direction center matches in the tire equatorial plane S1 in the tire-width direction. Then, the larger by comparing CW1 and CW2, is prescribed as CW (Step S2). In Fig. 2, CW1 on the left side is defined as CW. Next, the length from the tire-width direction center to each of the ends 21A in the tire-width direction of the belt 21 is defined as BW, and the tire-width direction length SW of the sealant material coating area on one side in the tire-width direction from the tire-width direction center is prescribed as CW<SW<BW (Step S3). Next, a sealant layer 60 is formed by the sealant material coating (Step S4).

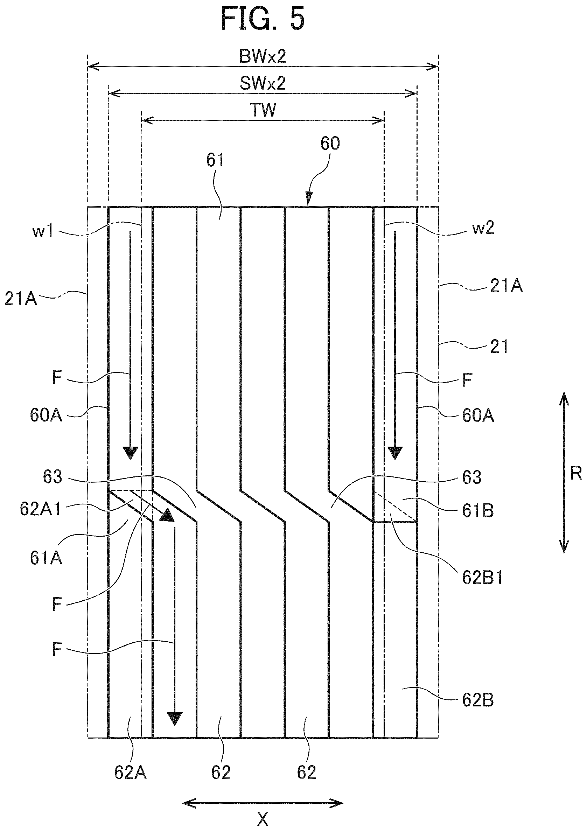

Fig. 5 is a view showing an example of a method specifically implementing Step S4, and is an exploded view showing a part in the circumferential direction of a tire inner surface to which the sealant material 61 is pasted and the sealant layer 60 is formed. Fig. 5 indicates the tire-circumferential direction by R, and indicates the tire-width direction by X. As shown in Fig. 5, the sealant layer 60 is formed by one belt-like sealant material 61 which is pasted while being wound along the tire-circumferential direction on the tire inner surface. The sealant layer 60 has a plurality of annular circling parts 62 and plurality of transition parts 63 formed by the sealant material 61.

The sealant layer 60 is formed by applying the belt-like sealant material 61 on the entire circumference of the application region in the tire-width direction of the sealant material 61 on the tire inner surface, while being wound around along the tire-circumferential direction, and while transitioning the path of this circling to a side of one direction (right direction in Fig. 5) of the tire-width direction every one turn. The annular circling parts 62 are arranged in parallel in the tire-width direction by a plurality of sealant material 61 extending in the tire-circumferential direction. In the embodiment, as shown in Fig. 2, the tire-width direction length SWx2 in the sealant material coating area becomes the coating area length in the tire-width direction of the sealant material 61. It should be noted that the sealant material 61 may be pasted to the tire inner surface while transitioning to the tire-width direction every one turn; however, it may be pasted to overlap for two turns or three turns at the same location in the tire-width direction. The coating area length in the tire-width direction of the sealant material 61 is an integer multiple of the pitch width, which is the tire-width direction length of the circling part 62.

It should be noted that, in order to set the coating area length of the tire-width direction of the sealant material 61 as an integer multiple of the pitch width, which is the tire-width direction length of the circling part 62, and establish so as to satisfy CW<SW<BW, it can be done by adopting the following such calculation step. In other words, the value of the integer satisfying (CWx2)<(pitch width x integer) < (BWx2) is calculated when any pitch number. At this time, in the case of there being no integer value satisfying this equation, the pitch width is varied. For example, in the case of CW being 85 mm, BW being 95 mm, and pitch width being 12 mm, the integer value becomes 15, and the SW satisfying CW<SW<BW is determined as 90 mm, for example.

In Fig. 5, the reference symbol 61A indicates the winding start of the sealant material 61, and the reference symbol 61B indicates the winding end of the sealant material 61. The sealant material 61 is continuously pasted from one end side to the other end side (left side to right side in Fig. 5) in the tire-width direction, while winding around as shown by the arrow F, from the winding start 61A to the winding end 61B.

The circling part 62 is formed by the sealant material 61 being pasted on the tire inner surface in parallel with the tire-circumferential direction. The plurality of circling parts 62 are arranged in parallel so as to be adjacent in a state close to each other in the tire-width direction. The plurality of transition parts 63 slope with a predetermined angle relative to the tire-circumferential direction, and are arranged in parallel so as to be adjacent in a state close to each other.

The transition parts 63 are provided aligned at predetermined positions in the tire-circumferential direction. The transition part 63 is a portion at which the sealant material 61 transitions to one side in the tire-width direction (right side in Fig. 5), after one circling part 62 is formed by the sealant material 61 being pasted for about one turn on the tire inner surface. The next circling part 62 is pasted, through the transition part 63, to be adjacent at one side in the tire-width direction of the pasted circling part 62. The next circling part 62 adjacent on one side in the tire-width direction is repeatedly formed via the transition part 63, whereby the sealant layer 60 is formed. Upon pasting the sealant material 61 to the tire inner surface in this way, the pasting method of sequentially arranging and pasting in the tire-width direction the circling parts 62 parallel in the tire-circumferential direction while passing through the transition parts 63 may be referred to as step pasting below.

As the sealant material 61, for example, it is possible to use a sealing member having stickiness made by blending a plasticizer such as polyisobutylene and polybutene, a tackifier such as a thermoplastic olefin/diolefin copolymer, and a filler such as carbon black and silica, into unvulcanized or semi-vulcanized butyl rubber, for example. It should be noted that, not limiting thereto, the sealant material 61 may be another known sealing member that is being used conventionally. In addition, it is preferable to include a characteristic of the fluidity being low and hardly flowing even during high-speed running.

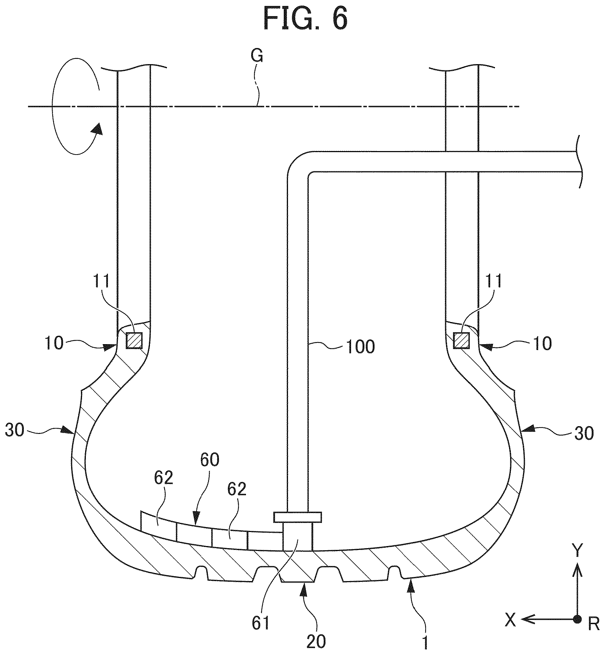

Fig. 6 is a view schematically showing an example of a method of applying the sealant material 61 to the tire inner surface in the step pasting. In Fig. 6, a width-direction cross section of the tire 1 is shown, and the tire-width direction X, tire-radial direction Y and tire-circumferential direction R are respectively shown. To step paste the sealant material 61, it is possible to perform by discharging and coating the sealant material 61 onto the inner surface of the tire 1, from the nozzle 100, while rotating the tire 1 around the axis line G, and moving the nozzle 100 in the tire-width direction, as shown in Fig. 6. The nozzle 100 is attached to the leading end of an extruder (not shown), and is inserted to the inner side of the tire 1. The sealant material 61 extruded from this extruder is discharged and coated on the inner surface of the tire 1 from the leading end of the nozzle 100.

One circling part 62 is coated by rotating the tire 1 approximately one time in a state stopping movement in the tire-width direction, while discharging the sealant material 61 continuously from the nozzle 100, and while continuously rotating the tire 1 around its axis. Next, when moving the nozzle 100 to one side in the tire-width direction by the width of the sealant material 61, the transition part 63 is coated meanwhile. Next, the movement in the tire-width direction is stopped, and the circling part 62 next to the previously coated circling part 62 is coated. By repeating the above operation, it is possible to step paste the sealant material 61 onto the formation area of the sealant layer 60. When coating and pasting the sealant material 61 to the entirety of the formation area of the sealant layer 60, discharge of sealant material 61 from the nozzle 100 stops. The sealant layer 60 is formed by the sealant material 61 in this way. Upon step pasting, it is preferable to determine the winding start 61A so that the coating amount does not vary at the left side and right side of the tire-width direction center.

It should be noted that, as shown in Fig. 6, the cross-sectional shape of the sealant material 61 discharged from the nozzle 100 and pasted on the tire inner surface is preferably a substantially rectangular shape. It is thereby possible to equalize the thickness as the sealant layer 60. In addition, the adjacent circling parts 62 are in close contact with each other in the tire-width direction, and a gap hardly occurs between the circling parts 62.

In the case of the sealant material 61 being step pasted to the tire inner surface in the above way, the initial circling part 62A on one end side in the tire-width direction (left side in Fig. 5) formed first among the plurality of circling parts 62 has a first sealant material increasing part 62A1 which overlaps in the tire-thickness direction at the transition part 63 from the initial circling part 62A to the next circling part 62, as shown in Fig. 5. In addition, the finishing circling part 62B on the other end side in the tire-width direction (right side in Fig. 5) formed last has a second sealant material increasing part 62B1 which overlaps in the tire-thickness direction with the transition part 63 transitioning to the finishing circling part 62B. The first sealant material increasing part 62A1 is a triangular portion at which the transition part 63 overlaps over the winding start 61A. The second sealant material increasing part 62B1 is a triangular portion at which the winding end 61B overlaps over the transition part 63.

According to the tire 1 of the aforementioned embodiment, in the case of a nail or the like poking the tread 20, for example, and a hole that reaches the sealant layer 60 occurring, this hole is automatically plugged by the sealant layer 60, and the puncture is prevented before it happens.

In the sealant layer 60 formed on the tire inner surface in the above way, the tire-width direction length thereof is larger than the contact width TW, and each of the ends 60A on both sides in the tire-width direction of the sealant layer 60 is positioned more to the outer side in the tire-width direction than each of both ends w1, w2 of the contact width TW. Since the contact surface 25a of the tread 20 is at the inner side of the tire-width direction area of the sealant layer 60, the puncture prevention function by the sealant layer 60 becomes sufficient. On the other hand, the tire-width direction length of the belt 21 is larger than the tire-width direction length of the sealant layer 60, and each of the ends 21A on both sides in the tire-width direction of the belt 21 is positioned more to the outer side in the tire-width direction than each of the ends 60A on both sides in the tire-width direction of the sealant layer 60. Even if heat is generated by the portion of both ends in the tire-width direction of the belt 21 deforming, this heat thereby tends to be radiated without being hindered by the sealant layer 60. Heat damage of the tire 1 is thereby suppressed. In other words, according to the production method of the embodiment, it is possible to provide a production method of a pneumatic tire which can suppress the occurrence of heat damage, while maintaining the puncture prevention function by the sealant layer 60.

The following effects are exerted by the above-mentioned embodiment.

(1) The production method of a tire according to the embodiment is a production method of a tire including tread 20 which includes a belt 21, in which a sealant layer 60 is provided at least to an inner surface of the tread 20, the method including: measuring a contact width TW of the tire 1; when defining a tire-width direction length from a tire-width direction center until an end of the contact width TW as CW1, and defining a tire-width direction length from the tire-width direction center until another end of the contact width TW as CW2, comparing CW1 and CW2 and establishing a larger thereof as CW; establishing a length from the tire-width direction center until an end in the tire-width direction of the belt 21 as BW, and prescribing a tire-width direction length SW of a sealant material coating area on one side in the tire-width direction from the tire-width direction center as CW<SW<BW; and arranging in parallel in the tire-width direction a plurality of annular circling parts 62 of a sealant material 61 extending in the tire-circumferential direction to provide the sealant layer 60, by establishing a tire-width direction length SW x 2 of the sealant material coating area on the inner surface of the tread 20 as a coating area length in the tire-width direction of the sealant material 61, and coating a belt-like sealant material 61 on the coating area in the tire-width direction of the sealant material 61, while circling along the tire-circumferential direction, and while transitioning a path of circling thereof to one direction side of the tire-width direction at least once every circling.
   It is thereby possible to provide a production method of a pneumatic tire which can suppress the occurrence of heat damage, while maintaining the puncture prevention function by the sealant layer 60.
(2) In the production method of a tire according to the embodiment, it is preferable for a coating area length in the tire-width direction of the sealant material 61 to be an integer multiple of a pitch width which is a tire-width direction length of the circling part 62. It is thereby possible to evenly arrange the sealant layer 60 relative to the contact width TW of the tread 20 with balance.

Although an embodiment has been explained above, the present invention is not limited to the above embodiment, and even if carrying out modifications, improvements and the like in a scope that can achieve the object of the present invention, are included in the scope of the present invention.

## Claims

1. A production method of a tire comprising tread (20) which includes a belt (21), wherein a sealant layer (60) is provided at least to an inner surface of the tread (20), the method comprising:
measuring a contact width (TW) of the tire (1);
when defining a tire-width direction length from a tire-width direction center until an end of the contact width (TW) as CW1, and defining a tire-width direction length from the tire-width direction center until another end of the contact width (TW) as CW2, comparing CW1 and CW2 and establishing a larger thereof as CW;
establishing a length from the tire-width direction center until an end in the tire-width direction of the belt (21) as BW, and prescribing a tire-width direction length SW of a sealant material coating area on one side in the tire-width direction from the tire-width direction center as CW<SW<BW; and
arranging in parallel in the tire-width direction a plurality of annular circling parts (62) of a sealant material (61) extending in the tire-circumferential direction to provide the sealant layer (60), by establishing a tire-width direction length SW x 2 of the sealant material coating area on the inner surface of the tread (20) as a coating area length in the tire-width direction of the sealant material (61), and coating a belt-like sealant material (61) on the coating area in the tire-width direction of the sealant material (61), while circling along the tire-circumferential direction, and while transitioning a path of circling thereof to one direction side of the tire-width direction at least once every circling.

2. The production method of a tire according to claim 1, wherein a coating area length in the tire-width direction of the sealant material (61) is an integer multiple of a pitch width which is a tire-width direction length of the circling part (62).

3. The production method of a tire according to claim 1 or 2, wherein the sealant material (61) is pasted for substantially one circling on a tire inner surface to form one of the circling parts (62), followed by a transition part (63) which is a portion at which the sealant material (61) transitions to one side in the tire-width direction is provided,
wherein the transition part (63) is provided aligned at a predetermined position in a tire-circumferential direction.

4. The production method of a tire according to any one of claims 1 to 3, wherein a plurality of the circling parts (62) are disposed in parallel so as to be adjacent in a state close to each other in the tire-width direction.

5. The production method of a tire according to claim 3 or 4, wherein a plurality of the transition parts (63) are disposed in parallel so as to slope with a predetermined angle relative to the tire-circumferential direction, and to be adjacent in a state close to each other.

6. The production method of a tire according to any one of claims 1 to 5, wherein a cross-sectional shape of the sealant material (61) is rectangular.

7. The production method of a tire according to any one of claims 1 to 6, wherein thickness of the sealant layer (60) is at least 2 mm.

## Patentansprüche

1. Herstellungsverfahren eines Reifens, umfassend eine Lauffläche (20), die einen Riemen (21) beinhaltet, wobei eine Dichtungsschicht (60) mindestens auf einer Innenfläche der Lauffläche (20) bereitgestellt ist, wobei das Verfahren Folgendes umfasst:
Messen der Kontaktbreite (TW) des Reifens (1);
wenn eine Reifenbreitenrichtungslänge von einer Reifenbreitenrichtungsmitte bis zu einem Ende der Kontaktbreite (TW) als CW1 definiert wird und eine Reifenbreitenrichtungslänge von der Reifenbreitenrichtungsmitte bis zu einem anderen Ende der Kontaktbreite (TW) als CW2 definiert wird, Vergleichen von CW1 und CW2 und Festlegen des größeren davon als CW;
Festlegen einer Länge von der Reifenbreitenrichtungsmitte bis zu einem Ende in der Reifenbreitenrichtung des Riemens (21) als BW, und Vorschreiben einer Reifenbreitenrichtungslänge SW eines Dichtungsmaterial-Beschichtungsbereichs auf einer Seite in der Reifenbreitenrichtung von der Reifenbreitenrichtungsmitte als CW<SW<BW; und
Anordnen, parallel in der Reifenbreitenrichtung, einer Vielzahl von ringförmigen, kreisenden Teilen (62) eines Dichtungsmaterials (61), die sich in der Reifenumfangsrichtung erstrecken, um die Dichtungsschicht (60) bereitzustellen, indem eine Reifenbreitenrichtungslänge SW x 2 des Dichtungsmaterial-Beschichtungsbereichs auf der Innenfläche der Lauffläche (20) als eine Beschichtungsbereichslänge in der Reifenbreitenrichtung des Dichtungsmaterials (61) festgelegt wird, und Auftragen eines riemenartigen Dichtungsmaterials (61) auf den Beschichtungsbereich in der Reifenbreitenrichtung des Dichtungsmaterials (61), während des Kreisens entlang der Reifenumfangsrichtung und während des Übergehens eines Pfads des Kreisens desselben zu einer Richtungsseite der Reifenbreitenrichtung mindestens einmal bei jedem Kreisen.

2. Herstellungsverfahren eines Reifens nach Anspruch 1, wobei die Beschichtungsbereichslänge des Dichtungsmaterials (61) in der Reifenbreitenrichtung ein ganzzahliges Vielfaches der Pitchbreite ist, die eine Reifenbreitenrichtungslänge des kreisenden Teils (62) ist.

3. Herstellungsverfahren eines Reifens nach Anspruch 1 oder 2, wobei das Dichtungsmaterial (61) im Wesentlichen für ein Kreisen auf die Innenfläche des Reifens aufgebracht wird, um eines der kreisenden Teile (62) auszubilden, gefolgt von einem Übergangsteil (63), das ein Abschnitt ist, an dem das Dichtungsmaterial (61) zu einer Seite in der Reifenbreitenrichtung übergeht, bereitgestellt ist,
wobei das Übergangsteil (63) in einer vorbestimmten Position in einer Reifenumfangsrichtung bereitgestellt und ausgerichtet ist.

4. Herstellungsverfahren eines Reifens nach einem der Ansprüche 1 bis 3, wobei eine Vielzahl von kreisenden Teilen (62) parallel zueinander angeordnet sind, so dass sie in der Reifenbreitenrichtung benachbart in einem Zustand dicht beieinander liegen.

5. Herstellungsverfahren eines Reifens nach Anspruch 3 oder 4, wobei eine Vielzahl von Übergangsteilen (63) parallel angeordnet sind, so dass sie in einem vorbestimmten Winkel relativ zur Reifenumfangsrichtung geneigt sind und benachbart in einem Zustand dicht beieinander liegen.

6. Herstellungsverfahren eines Reifens nach einem der Ansprüche 1 bis 5, wobei eine Querschnittsform des Dichtungsmaterials (61) rechteckig ist.

7. Herstellungsverfahren eines Reifens nach einem der Ansprüche 1 bis 6, wobei die Dicke der Dichtungsschicht (60) mindestens 2 mm beträgt.

## Revendications

1. Procédé de production d'un pneu comprenant une bande de roulement (20) qui comporte une ceinture (21), une couche (60) de matériau d'étanchéité étant disposée au moins sur une surface interne de la bande de roulement (20), le procédé comprenant :
la mesure d'une largeur de contact (TW) du pneu (1) ;
lors de la définition d'une longueur, dans le sens de la largeur du pneu, à partir d'un centre dans le sens de la largeur du pneu jusqu'à une extrémité de la largeur de contact (TW) en tant que CW1, et de la définition d'une longueur, dans le sens de la largeur du pneu, à partir du centre dans le sens de la largeur du pneu jusqu'à une autre extrémité de la largeur de contact (TW) en tant que CW2, la comparaison de CW1 et CW2 et l'établissement de la plus grande d'entre elles en tant que CW;
l'établissement d'une longueur à partir du centre, dans le sens de la largeur du pneu, jusqu'à une extrémité, dans le sens de la largeur du pneu, de la ceinture (21) en tant que BW, et l'indication d'une longueur SW, dans le sens de la largeur du pneu, d'une zone de revêtement de matériau d'étanchéité sur un côté, dans le sens de la largeur du pneu, à partir du centre dans le sens de la largeur du pneu en tant que CW<SW<BW; et
l'agencement en parallèle, dans le sens de la largeur du pneu, d'une pluralité de parties de cerclage annulaires (62) d'un matériau d'étanchéité (61) s'étendant dans la direction circonférentielle du pneu afin de fournir la couche (60) de matériau d'étanchéité, au moyen de l'établissement d'une longueur SW x 2, dans le sens de la largeur du pneu, de la zone de revêtement de matériau d'étanchéité sur la surface interne de la bande de roulement (20) en tant que longueur de la zone de revêtement, dans le sens de la largeur du pneu, du matériau d'étanchéité (61), et le revêtement d'un matériau d'étanchéité (61) similaire à une ceinture sur la zone de revêtement, dans le sens de la largeur du pneu, du matériau d'étanchéité (61), tout en effectuant un cerclage le long de la direction circonférentielle du pneu, et passant de son trajet de cerclage à un côté directionnel du sens de la largeur du pneu au moins une fois par cerclage.

2. Le procédé de production d'un pneu selon la revendication 1, dans lequel une longueur de la zone de revêtement, dans le sens de la largeur du pneu, du matériau d'étanchéité (61) est un entier multiple d'une largeur de pas, laquelle est une longueur, dans le sens de la largeur du pneu, de la partie de cerclage (62).

3. Le procédé de production d'un pneu selon les revendications 1 ou 2, dans lequel le matériau d'étanchéité (61) est collé pendant sensiblement un cerclage sur une surface interne du pneu afin de former l'une de parties de cerclage (62), suivie d'une partie de transition (63), qui est une partie au niveau de laquelle le matériau d'étanchéité (61) passe à une côté dans le sens de la largeur du pneu,
la partie de transition (63) étant disposée alignée au niveau d'une position prédéfinie dans une direction circonférentielle du pneu.

4. Le procédé de production d'un pneu selon l'une quelconque des revendications 1 à 3, dans lequel plusieurs parties, parmi les parties de cerclage (62), sont disposées en parallèle de façon à être adjacentes dans un état les unes à proximité des autres dans le sens de la largeur du pneu.

5. Le procédé de production d'un pneu selon les revendications 3 ou 4, dans lequel plusieurs parties, parmi les parties de transition (63), sont disposées en parallèle de façon à s'incliner selon un angle prédéfini par rapport à la direction circonférentielle du pneu, et à être adjacentes dans un état les unes à proximité des autres.

6. Le procédé de production d'un pneu selon l'une quelconque des revendications 1 à 5, dans lequel une forme en coupe transversale du matériau d'étanchéité (61) est rectangulaire.

7. Le procédé de production d'un pneu selon l'une quelconque des revendications 1 à 6, dans lequel une épaisseur de la couche (60) de matériau d'étanchéité est égale à au moins 2 mm.
